# FASCICULE DE BREVET EUROPEEN

(11) **EP 0 950 643 B1**
(45) Date de publication et mention de la délivrance du brevet: **30.03.2005**
(21) Numéro de dépôt: 99400828.2
(22) Date de dépôt: 06.04.1999
(51) Int. Cl.: C03B 23/207, C03B 23/045, C03B 23/043, C03B 37/012

(54) **Soudage bout à bout de préformes de fibres optiques à l'aide d'une torche à plasma**
Schweissen der Enden von optischen Vorformen mittels einer Plasmafackel
Soldering the ends of optical preforms together by means of a plasma torch

(30) Priorité: 09.04.1998 FR 9804432
(43) Date de publication de la demande: 20.10.1999
(73) Titulaire: Draka Comteq B.V., 1018 TX Amsterdam (NL)
(72) Inventeur: Wurier, Bernard, 95760 Valmondois (FR); Drouart, Alain, 92000 Nanterre (FR); Ripoche, Pierre, 45300 Pithiviers (FR)
(74) Mandataire: Blokland, Arie

(56) Documents cités:
- EP-A- 0 623 563
- EP-A- 0 656 325
- EP-A- 0 928 780
- GB-A- 2 081 250
- US-A- 4 561 874
- US-A- 5 158 589

## Description

L'invention se rapporte à un procédé pour assembler bout à bout deux préformes de fibres optiques, dans lequel :
- on dispose les deux préformes cylindriques de façon coaxiale,
- on entraîne les deux préformes en rotation autour d'un axe,
- on chauffe les extrémités des deux préformes qui se font face,
- on rapproche les deux préformes parallèlement à l'axe pour les presser l'une contre l'autre afin de former après refroidissement un contact intime entre les extrémités chauffées.

Un tel procédé est connu notamment de la demande de brevet allemand DE-29 32 196. Dans cette demande, les préformes à assembler ont typiquement une longueur et un diamètre égaux respectivement à 300 mm et 10 mm. Le moyen de chauffage utilisé est un chalumeau, ou un four à résistance, ou encore un laser. Les préformes cylindriques sont mises en rotation autour de leur direction axiale pour rendre le chauffage uniforme sur le pourtour de chaque extrémité.

Le document selon l'article 54(3) CBE, brevet européen EP 928780, présente un tour verrier comprenant une potence à crémaillères portant un chalumeau.

Aujourd'hui on utilise des préformes dont le diamètre est typiquement compris entre 100 et 170 mm pour augmenter la longueur de fibre optique obtenue par étirage.

L'assemblage de ces préformes requiert une puissance de chauffage qui est beaucoup plus élevée que celle qui convient pour des préformes de 10 mm de diamètre, étant donné que le volume de matière à ramollir varie avec le carré du diamètre. D'autre part, l'apport calorifique doit être tel que le ramollissement de la matière est sensiblement uniforme dans le volume chauffé de chaque extrémité ; ceci est d'autant plus critique que la périphérie et le coeur de la préforme n'ont pas la même température de fusion, la périphérie de la préforme ne contenant en général pas d'éléments dopants alors que le coeur en contient.

L'invention a donc pour but de mettre au point un procédé pour assembler bout à bout deux préformes de fibres optiques de grands diamètres et de compositions radiales non uniformes.

L'invention propose à cet effet un procédé pour assembler bout à bout deux préformes de fibres optiques comprenant les opérations suivantes :
- on dispose les deux préformes cylindriques de façon coaxiale le long d'un axe longitudinal commun,
- on entraîne en rotation lesdites préformes autour dudit axe longitudinal commun,
- on chauffe les extrémités desdites préformes qui se font face à l'aide de moyens de chauffage,
- on rapproche lesdites préformes parallèlement audit axe commun pour les presser l'une contre l'autre afin de former après refroidissement un contact intime entre lesdites extrémités,
**caractérisé en ce que** ledit chauffage est réalisé en effectuant un déplacement relatif desdits moyens de chauffage par rapport auxdites extrémités selon une direction radiale orthogonale audit axe longitudinal commun, de façon à chauffer la périphérie puis le coeur desdites préformes.

En déplaçant radialement les moyens de chauffage devant chaque extrémité depuis la périphérie vers le centre des préformes, on chauffe dans un premier temps des couches ayant une température de fusion relativement élevée en raison de l'absence d'éléments dopants, et dans un deuxième temps, des couches de coeur ayant une température de fusion plus basse en raison de la présence des dopants.

De cette manière, on ramollit de façon sensiblement uniforme le volume chauffé de chaque extrémité, ce qui permet de souder les deux préformes bout à bout en empêchant tout écoulement de la matière la plus fusible lors du pressage des deux préformes. Il en résulte une soudure homogène qui conserve par rapport à l'ensemble de la fibre étirée, ses propriétés mécaniques et optiques à la portion de fibre étirée à partir de la zone soudée.

Avantageusement, les moyens de chauffage comprennent une torche à plasma. La torche à plasma génère une flamme molle qui est à la fois calorifique et focalisée. Le chauffage par la torche à plasma permet en outre de volatiliser une couche superficielle de matière de chaque extrémité des préformes. On élimine ainsi une opération préalable de nettoyage par des agents chimiques. De préférence, on utilise un gaz plasmagène propre pour éviter de polluer chaque extrémité.

L'invention s'applique également à l'assemblage d'une préforme et d'un embout de verre. Dans ce cas, l'invention propose un procédé pour assembler bout à bout une préforme de fibre optique et un embout cylindrique en un matériau vitreux comprenant les opérations suivantes :
- on dispose ladite préforme cylindrique et ledit embout de façon coaxiale le long d'un axe longitudinal commun,
- on entraîne en rotation ladite préforme et ledit embout autour dudit axe longitudinal commun,
- on chauffe les extrémités de ladite préforme et dudit embout qui se font face à l'aide de moyens de chauffage,
- on rapproche ladite préforme et ledit embout parallèlement audit axe commun pour les presser l'une contre l'autre afin de former après refroidissement un contact intime entre lesdites extrémités,
**caractérisé en ce que** ledit chauffage est réalisé en effectuant un déplacement relatif desdits moyens de chauffage par rapport auxdites extrémités selon une direction radiale orthogonale audit axe longitudinal commun, de façon à chauffer d'abord la périphérie de ladite préforme puis le coeur de ladite préforme et ledit embout.

D'autres caractéristiques et avantages de l'invention apparaîtront à la lecture de la description d'un mode de réalisation illustré par les dessins. Dans les figures suivantes :
- la figure 1 montre schématiquement un dispositif permettant la mise en oeuvre du procédé selon l'invention pour l'assemblage bout à bout de deux préformes de fibres optiques,
- la figure 2 montre schématiquement une torche à plasma occupant une première position décalée par rapport à l'axe de rotation des préformes pour chauffer une zone périphérique des extrémités des préformes,
- la figure 3 montre schématiquement une torche à plasma occupant une deuxième position permettant de chauffer une zone centrale des extrémités des préformes.

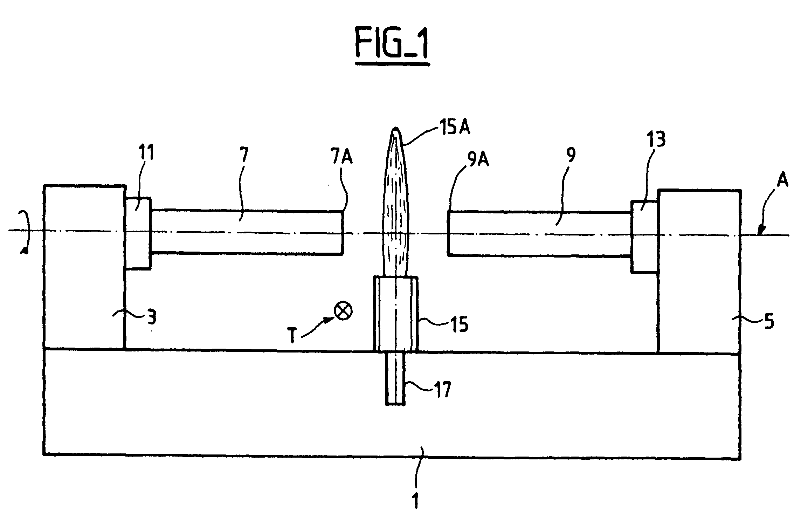

Un procédé d'assemblage de préformes bout à bout est mis en oeuvre par un dispositif qui comprend, figure 1, un tour verrier horizontal 1 avec deux mandrins 11 et 13 montés sur deux supports 3 et 5. Les deux mandrins entraînent en rotation autour d'un même axe A deux préformes cylindriques 7 et 9. Le dispositif de soudure est installé à l'air ambiant.

Les extrémités qui se font face 7A et 9A des deux préformes 7 et 9 sont chauffées pour être ramollies. Le support 3 est mobile en translation parallèlement à l'axe de rotation A pour rapprocher la préforme 7 vers l'autre préforme 9 et pour presser les deux extrémités ramollies 7A et 9A afin de former, après refroidissement, une soudure intime.

Selon l'invention, une torche à plasma 15 est montée fixe sur un bras 17 qui coulisse par rapport au tour verrier horizontal 1 suivant une direction T perpendiculaire à l'axe de rotation A afin de déplacer la torche à plasma 15 en translation devant les deux extrémités 7A et 9A des préformes.

Dans le mode de réalisation représenté sur les figures, la torche à plasma 15 est mobile dans un plan perpendiculaire à l'axe de rotation A par l'intermédiaire du bras coulissant 17, et s'étend suivant une direction longitudinale L qui est inclinée à 45° par rapport au tour verrier horizontal 1.

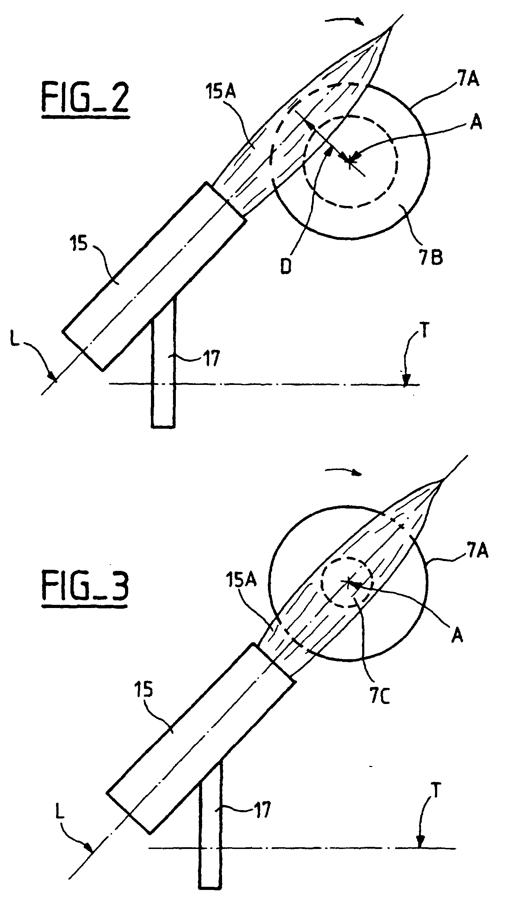

Lors du chauffage, la torche à plasma 15 est déplacée à l'aide du bras coulissant 17 pour occuper dans un premier temps, figure 2, une position décalée par rapport à l'axe de rotation A des deux préformes. Le décalage de la torche à plasma est matérialisé sur la figure par une distance D qui sépare l'axe de rotation A de la direction longitudinale L de la torche à plasma 15 suivant laquelle est focalisée une flamme 15A. La torche 15 est maintenue dans cette position aussi longtemps qu'il est nécessaire pour ramollir le volume chauffé par la flamme 15A sur une zone périphérique 7B ou 9B de l'extrémité de la préforme 7 ou 9.

Dans un deuxième temps, la torche à plasma 15 est déplacée à l'aide du bras coulissant 17 pour occuper, figure 3, une position dans laquelle la direction longitudinale L coupe l'axe de rotation A. La torche est maintenue dans cette positon aussi longtemps qu'il est nécessaire pour ramollir le volume chauffé par la flamme 15A sur une zone centrale 7C ou 9C de l'extrémité de la préforme 7 ou 9.

Le coeur de chaque préforme est constitué de silice dopée par exemple avec du germanium, et sa température de fusion est plus basse que celle des couches périphériques qui sont constituées de silice ne contenant pas de germanium. Le chauffage en deux temps par translation de la torche à plasma de la périphérie vers le centre des extrémités des deux préformes porte à un même degré de ramollissement les couches périphérique 7B et le coeur 7C. On évite ainsi un écoulement de la zone fusible à plus basse température par rapport à la zone fusible à plus haute température, ce qui confère à la soudure un caractère homogène. Comme indiqué précédemment, la portion de fibre étirée à partir de la zone soudée conserve ainsi les propriétés mécaniques et optiques des longueurs de fibre obtenues à partir des zones des préformes non affectées par la soudure.

Lors de l'opération de chauffage, la puissance calorifique de la torche à plasma permet en outre de volatiliser une couche superficielle de matière des extrémités à assembler. Un traitement chimique de préparation des extrémités, par exemple à l'aide d'un acide fort, n'est donc pas nécessaire. Le gaz plasmagène utilisé dans la torche à plasma est de préférence exempt d'impuretés pour ne pas polluer les extrémités chauffées.

Après la translation de la préforme 7 vers la préforme 9 (par exemple) et la mise en contact par pression des deux extrémités 7A et 9A, la torche à plasma 15 est éteinte. Un bourrelet formé à la jointure des deux préformes est façonné à l'aide d'une palette en graphite.

On dispose autour des deux préformes de part et d'autre de la soudure un manteau calorifuge non polluant, par exemple en laine de silice, pour ralentir le refroidissement, ou on utilise un four disposé autour des deux préformes pour contrôler la vitesse du refroidissement. Dans les deux cas, on prévient la formation de contraintes thermiques. Pour cette même raison, on prévoit également de déverrouiller l'une des deux préformes de son mandrin.

Dans le mode de réalisation décrit précédemment, la torche à plasma 15 est mobile en translation T par rapport à l'axe de rotation A du tour verrier 1 qui est fixe. Il peut également être prévu de monter la torche 15 fixe par rapport au tour verrier 1 et de déplacer en translation T les préformes 7 et 9 à l'aide des supports 3 et 5 munis chacun de deux degrés de liberté dans un plan perpendiculaire à l'axe de rotation A.

Avantageusement, l'invention s'applique à l'assemblage d'une préforme et d'un embout de verre cylindrique possédant un diamètre égal ou inférieur à celui de la préforme, par exemple 40 mm, par rapport à un diamètre de préforme compris entre 100 mm et 170 mm. Dans cette application, on chauffe dans un premier temps les couches périphériques de l'extrémité de la préforme, et dans un deuxième temps, le coeur de la préforme et l'extrémité de l'embout.

## Revendications

1. Procédé pour assembler bout à bout deux préformes (7, 9) de fibres optiques comprenant les opérations suivantes :
• on dispose les deux préformes cylindriques (7, 9) de façon coaxiale le long d'un axe longitudinal commun (A),
• on entraîne en rotation lesdites préformes (7, 9) autour dudit axe longitudinal commun (A),
• on chauffe les extrémités (7A, 9A) desdites préformes (7, 9) qui se font face à l'aide de moyens de chauffage (15),
• on rapproche lesdites préformes (7, 9) parallèlement audit axe commun (A) pour les presser l'une contre l'autre afin de former après refroidissement un contact intime entre lesdites extrémités (7A, 9A),
**caractérisé en ce que** ledit chauffage est réalisé en effectuant un déplacement relatif desdits moyens de chauffage (15) par rapport auxdites extrémités (7A, 9A) selon une direction radiale orthogonale audit axe longitudinal commun (A), de façon à chauffer la périphérie (7B, 9B) puis le coeur (7C, 9C) desdites préformes (7, 9).

2. Procédé selon la revendication 1 **caractérisé en ce que** lesdits moyens de chauffage comprennent une torche à plasma (15).

3. Procédé selon la revendication 2 **caractérisé en ce que** l'on alimente la torche à plasma (15) par un gaz plasmagène exempt d'impuretés.

4. Procédé pour assembler bout à bout une préforme de fibre optique et un embout cylindrique en un matériau vitreux comprenant les opérations suivantes :
• on dispose ladite préforme cylindrique et ledit embout de façon coaxiale le long d'un axe longitudinal commun,
• on entraîne en rotation ladite préforme et ledit embout autour dudit axe longitudinal commun,
• on chauffe les extrémités de ladite préforme et dudit embout qui se font face à l'aide de moyens de chauffage,
• on rapproche ladite préforme et ledit embout parallèlement audit axe commun pour les presser l'une contre l'autre afin de former après refroidissement un contact intime entre lesdites extrémités,
**caractérisé en ce que** ledit chauffage est réalisé en effectuant un déplacement relatif desdits moyens de chauffage par rapport auxdites extrémités selon une direction radiale orthogonale audit axe longitudinal commun, de façon à chauffer d'abord la périphérie de ladite préforme puis le coeur de ladite préforme et ledit embout.

5. Dispositif de mise en oeuvre d'un procédé selon l'une des revendications 1 à 4 **caractérisé en ce que** lesdits moyens de chauffage (15) sont fixes par rapport au tour verrier (1) qui comprend deux supports (3,5) de préformes (7,9) mobiles dans un plan perpendiculaire à l'axe de rotation (A).

## Patentansprüche

1. Verfahren zum Verbinden Ende an Ende von zwei Vorformen (7, 9) optischer Fasern, das die folgenden Operationen aufweist:
• man ordnet die beiden zylindrischen Vorformen (7, 9) koaxial entlang einer gemeinsamen Längsachse (A) an,
• man bringt die Vorformen (7, 9) in Rotation um die gemeinsame Längsachse (A),
• man erhitzt die Enden (7A, 9A) der Vorformen (7, 9), die einander gegenüber kommen, mit Hilfe von Heizmitteln (15),
• man nähert die Vorformen (7, 9), parallel zur gemeinsamen Achse (A), an, um sie gegeneinander zu pressen, damit nach dem Abkühlen ein enger Kontakt zwischen den Enden (7A, 9A) geschaffen wird,
**dadurch gekennzeichnet, dass** das Erhitzen durchgeführt wird, indem ein relatives Verschieben der Heizmittel (15) bezüglich der Enden (7A, 9A) in einer radialen Richtung erfolgt, die orthogonal zur gemeinsamen Längsachse (A) verläuft, derart dass zuerst der Rand (7B, 9B), dann das Innere (7C, 9C) der Vorformen (7, 9) erhitzt wird.

2. Verfahren nach Anspruch 1, **dadurch gekennzeichnet, dass** die Heizmittel eine Plasmafackel (15) aufweisen.

3. Verfahren nach Anspruch 2, **dadurch gekennzeichnet, dass** man die Plasmafackel (15) durch ein plasmagenes Gas, das frei von Verunreinigungen ist, speist.

4. Verfahren zum Verbinden Ende an Ende einer Vorform einer optischen Fasern und eines zylindrischen Ansatzstücks aus einem glasförmigen Material, das die folgenden Operationen aufweist:
• man ordnet die zylindrische Vorform und das Ansatzstück koaxial entlang einer gemeinsamen Längsachse an,
• man bringt die Vorform und das Ansatzstück in Rotation um die gemeinsame Längsachse,
• man erhitzt die Enden der Vorform und des Ansatzstückes, die einander gegenüber kommen, mit Hilfe von Heizmitteln,
• man nähert die Vorform und das Ansatzstück, parallel zur gemeinsamen Achse, an, um sie gegeneinander zu pressen, damit nach dem Abkühlen ein enger Kontakt zwischen den Enden geschaffen wird,
**dadurch gekennzeichnet, dass** das Erhitzen durchgeführt wird, indem ein relatives Verschieben der Heizmittel bezüglich der Enden in einer radialen Richtung erfolgt, die orthogonal zur gemeinsamen Längsachse verläuft, derart dass zuerst der Rand der Vorform, dann das Innere der Vorform und das Ansatzstück erhitzt wird.

5. Vorrichtung zum Einsatz eines Verfahrens nach einem der Ansprüche 1 bis 4, **dadurch gekennzeichnet, dass** die Heizmittel (15) fest sind bezüglich der Glasrotationsvorrichtung (1), die zwei in einer Ebene senkrecht zur Rotationsachse (A) bewegliche Träger (3, 5) von Vorformen (7, 9) aufweist.

## Claims

1. Method of butt-joining two optical fibre preforms (7, 9), comprising the following operations:
• the two cylindrical preforms (7, 9) are arranged coaxially along a common longitudinal axis (A),
• said preforms (7, 9) are driven in rotation about said common longitudinal axis (A),
• those ends (7A, 9A) of said preforms (7, 9) which face one another are heated with the aid of heating means (15),
• said preforms (7, 9) are brought towards one another parallel to said common axis (A) and then pressed against one another to form, after cooling, an intimate contact between said ends (7A, 9A),
**characterised in that** said heating is carried out by bringing about a relative displacement of said heating means (15) in relation to said ends (7A, 9A) in a radial direction orthogonal to said common longitudinal axis (A) so as to heat the periphery (7B, 9B) and then the core (7C, 9C) of said preforms (7, 9).

2. Method according to claim 1, **characterised in that** said heating means comprise a plasma torch (15).

3. Method according to claim 2, **characterised in that** the plasma torch (15) is supplied with an impurity-free plasmagenic gas.

4. Method of butt-joining an optical fibre preform and a cylindrical tip of a vitreous material, comprising the following operations:
• said cylindrical preform and said tip are arranged coaxially along a common longitudinal axis,
• said preform and said tip are driven in rotation about said common longitudinal axis,
• those ends of said preform and said tip which face one another are heated with the aid of heating means,
• said preform and said tip are brought towards one another parallel to said common axis and then pressed against one another to form, after cooling, an intimate contact between said ends,
**characterised in that** said heating is carried out by bringing about a relative displacement of said heating means in relation to said ends in a radial direction orthogonal to said common longitudinal axis so as to heat first the periphery of said preform and then the core of said preform and said tip.

5. Apparatus for carrying out a method according to one of claims 1 to 4,
**characterised in that** said heating means (15) are fixed with respect to the glass-working lathe (1), which comprises two supports (3, 5) for preforms (7, 9), which are movable in a plane perpendicular to the axis of rotation (A).
